# EUROPÄISCHE PATENTSCHRIFT

(11) **EP 0 916 555 B1**
(45) Veröffentlichungstag und Bekanntmachung des Hinweises auf die Patenterteilung: **11.02.2004**
(21) Anmeldenummer: 98121168.3
(22) Anmeldetag: 12.11.1998
(51) Int. Cl.: B60R 21/20

(54) **Vorrichtung zum Abdecken eines Airbags**
Airbag covering device
Dispositif de recouvrement d'un airbag

(30) Priorität: 13.11.1997 DE 29720138 U
(43) Veröffentlichungstag der Anmeldung: 19.05.1999
(73) Patentinhaber: TRW Automotive Safety Systems GmbH, 63743 Aschaffenburg (DE)
(72) Erfinder: Kreile, Holger, 63820 Elsenfeld (DE)
(74) Vertreter: Degwert, Hartmut, Dipl.-Phys.

(56) Entgegenhaltungen:
- EP-A- 0 749 872
- WO-A-94/25312
- WO-A-97/03866
- DE-A- 4 344 523
- PATENT ABSTRACTS OF JAPAN vol. 016, no. 169 (M-1239), 23. April 1992 (1992-04-23) & JP 04 015145 A (ASAHI CHEM IND CO LTD), 20. Januar 1992 (1992-01-20)
- PATENT ABSTRACTS OF JAPAN vol. 1998, no. 09, 31. Juli 1998 (1998-07-31) & JP 10 095292 A (INOAC CORP), 14. April 1998 (1998-04-14)

## Beschreibung

Die Erfindung betrifft eine Vorrichtung zum Abdecken der Austrittsöffnung eines in einem Kraftfahrzeug angeordneten Airbags, die beim explosionsartigen Aufblasen des Airbags längs einer vorgegebenen Linie aufreißbar und ein- oder mehrteilig längs Biege- oder Scharnierlinien aufklappbar ist, wobei die Abdeckvorrichtung mehrschichtig ausgebildet ist.

Abdeckvorrichtungen werden üblicherweise optisch und haptisch an ihre Einbauumgebung angepaßt. Soweit es sich um einen Fahrer-Airbag handelt, muß die Abdeckvorrichtung demnach auf die Oberflächenstruktur und -farbe der Lenkradummantelung abgestimmt werden. Beifahrer-Airbags sind unterhalb der Armaturentafel angeordnet, so daß die Abdeckvorrichtungen in ihrer Oberfläche möglichst weitgehend mit der Oberfläche der Armaturentafel übereinstimmen müssen. Ähnliches gilt für Seiten-Airbags und alle anderen, in Kraftfahrzeugen zu installierenden Airbags.

Es dürfte ohne weiteres verständlich sein, daß die Anpassung der Abdeckvorrichtungen an ihre Einbauumgebung häufig mit erheblichen Schwierigkeiten verbunden ist, weil die Einbauumgebung u.U. aus Materialien besteht, die für die Herstellung einer Abdeckvorrichtung nicht oder nur bedingt brauchbar sind. Einschlägige Abdeckvorrichtungen sind daher in der Regel zwei- oder mehrschichtig aufgebaut, wobei die innenliegende Schicht auf die erforderliche Konstruktionsfestigkeit abgestimmt ist, während die äußere Schicht in Anpassung an die Einbauumgebung ausgelegt wird. In der überwiegenden Zahl der Fälle ist die Abdeckvorrichtung Teil eines gesonderten Airbag-Moduls, das als solches für den Einbau in ein Lenkrad, in ein Armaturenbrett oder andere Innenteile einer Fahrzeugkarosserie konzipiert ist. In diesen Fällen wird die Abdeckvorrichtung meist als "Abdeckkappe" bezeichnet, deren randseitige Begrenzung auf die Größe der Einbauöffnung abgestimmt ist und deren Aufreißbereich demgegenüber eine kleinere Fläche umfaßt.

Abdeckvorrichtungen der hier interessierenden Art können aber auch integraler Bestandteil eines Armaturenbretts oder eines anderen Innenbauteils für Kraftfahrzeugkarosserien sein, wobei die Anpassung an die Einbauumgebung im allgemeinen keine Probleme bereitet, wohl aber die genaue Lokalisierung der Aufreißlinie und die festigkeitsmäßige Dimensionierung der Sollbruchstellen.

Bisher ist man davon ausgegangen, daß bei zwei- oder mehrschichtig ausgebildeten Abdeckvorrichtungen in allen Schichten gleich lange und miteinander korrespondierende Aufreißlinien als Sollbruchstellen ausgebildet werden müssen, damit ein definierter Aufreißwiderstand in engen Grenzen reproduzierbar realisiert werden kann, weil insoweit keine unkalkulierbare Behinderung beim explosionsartigen Aufblasen des Airbags hingenommen werden kann. Diese Bedingung ist jedoch bei zwei- oder mehrschichtig ausgebildeten Abdeckvorrichtungen fertigungstechnisch nur mit erheblichem Aufwand zu erfüllen, weil für die Herstellung der einzelnen Schichten getrennte Arbeitsvorgänge und meist auch getrennte Formwerkzeuge erforderlich sind.

Aus der EP-A-0 749 872 und der DE 196 51 532 A sind Abdeckvorrichtungen der eingangs genannten Art bekannt, bei denen in inneren Schichten der Abdekkung Aufreißlinien gebildet sind, die von außen nicht sichtbar sind.

Durch die Erfindung wird eine Abdeckvorrichtung der eingangs genannten Art geschaffen, die sehr kostengünstig herstellbar ist, ohne daß beim explosionsartigen Aufblasen des Airbags und dem Aufreißen der Abdeckvorrichtung längs vorgegebener Linien unkalkulierbare Widerstände in Kauf genommen werden müssen.

Zur Lösung dieser Aufgabe wird eine Vorrichtung der eingangs genannten Art mit den kennzeichnenden Merkmalen des Anspruchs 1 vorgeschlagen.

Überraschenderweise haben Versuche gezeigt, daß in der zweiten Schicht keine vollständige Aufreißlinie erforderlich ist und daß die zweite Schicht auch unabhängig von der in der ersten Schicht vorgegebenen Aufreißlinie zerreißt, wenn der Airbag explosionsartig aufgeblasen wird. Es wurde festgestellt, daß es ausreicht, wenn die Aufreißlinie der zweiten Schicht nur teilweise korrespondierend zur Aufreißlinie der ersten Schicht ausgebildet ist. Offensichtlich kommt es weniger auf die statische Reißfestigkeit als auf die beim Aufreißen wirksamen dynamischen Kräfte an, so daß irgendwelche Aufreißwiderstände der zweiten Schicht kaum noch eine Rolle spielen, wenn die erste Schicht unter dem Einfluß der im Airbag wirkenden Gasdruckwelle aufgerissen wird. Es genügt daher, wenn die Aufreißlinie der zweiten Schicht kürzer ist, als die Aufreißlinie der ersten Schicht.

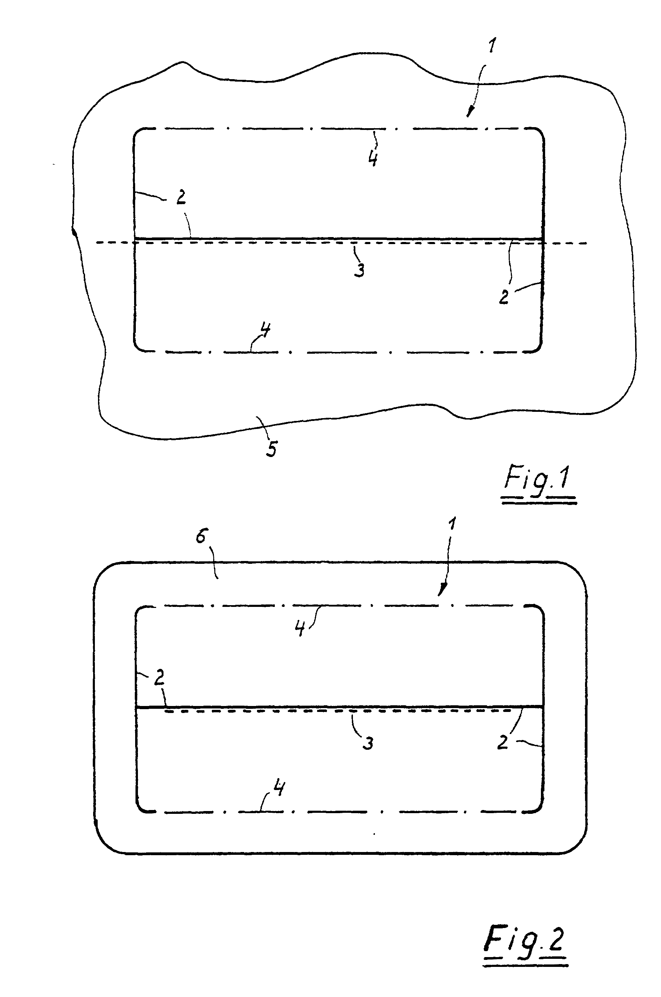

Vorteilhafte und zweckmäßige Ausgestaltungen des Neuerungsgedankens sind in den Unteransprüchen 3 bis 8 beschrieben. Weitere Einzelheiten werden anhand der in den Figuren 1 und 2 dargestellten Ausführungsbeispiele näher erläutert. Es zeigen:
- Figur 1 eine erste Ausführungsform der Abdeckvorrichtung gemäß der Neuerung in der Ansicht,
- Figur 2 eine zweite Ausführungsform der Neuerung ebenfalls in der Ansicht.

In Figur 1 ist mit 5 ein Ausschnitt der Einbauumgebung einer Abdeckvorrichtung 1 dargestellt, die beispielsweise Teil eines Armaturenbrettes sein kann. Die Abdeckvorrichtung 1 ist zweischichtig ausgebildet, wobei in der ersten Schicht eine vollständige Aufreißlinie 2 ausgebildet ist, die durch Biegelinien 4 ergänzt wird. Beim Aufblasen des Airbags reißt die Abdeckvorrichtung 1 zuerst entlang dem horizontal angeordneten Teil der Aufreißlinie 2 auf und dann längs der rechts und links sich daran anschließenden vertikalen Bereiche, so daß der obere und untere Teil der Abdeckvorrichtung 1 um die Biege- bzw. Scharnierlinien 4 aufklappen kann. Die Aufreißlinie 3 der zweiten Schicht ist nur längs des horizontalen Bereichs der Aufreißlinie 2 in der ersten Schicht ausgebildet und endseitig ein Stück über die vertikalen Bereiche hinaus verlängert. Es hat sich herausgestellt, daß eine derartig ausgebildete Aufreißlinie 3 in der zweiten Schicht völlig ausreichend ist, um ein einwandfreies Aufreißen zu gewährleisten. Es leuchtet ein, daß es bei der Herstellung sehr viel einfacher ist, die Aufreißlinie 3 in der zweiten Schicht korrespondierend zur Aufreißlinie 2 in der ersten Schicht auszubilden, als wenn auch noch die vertikalen Aufreißbereiche bei der Herstellung maßlich genau aufeinander abgestimmt werden müßten.

In Figur 2 ist mit 6 eine Abdeckkappe bezeichnet, die Bestandteil eines Airbag-Moduls ist, das als solches in eine Einbauumgebung, beispielsweise im Lenkrad oder im Armaturenbrett eines Kraftfahrzeuges eingebaut wird. Die Abdeckvorrichtung 1 ist Teil der Abdeckkappe 6 und weist in der ersten Schicht eine Aufreißlinie 2 als Sollbruchstelle auf, die genauso angeordnet ist, wie bei dem Ausführungsbeispiel gemäß Figur 1. Die Sollbruchlinie 3 in der zweiten Schicht ist nur korrespondierend zum waagerechten Bereich der Aufreißlinie 2 der ersten Schicht und auch nur über einen Teil von dessen Länge ausgebildet. Auch hier klappen die oberen und unteren Teile der Abdeckvorrichtung 1 um die Biege- oder Scharnierlinien 4 auf. Auch eine derartig ausgebildete Aufreißlinie 3 in der zweiten Schicht kann ausreichend sein, weil die dynamischen Kräfte beim explosionsartigen Aufblasen des Airbags erwiesenermaßen ausreichend sind, das weitere Aufreißen der zweiten Schicht längs beliebiger Linien zu bewirken, die im wesentlichen durch die Aufreißlinie der ersten Schicht vorgegeben sind.

Es sei noch angemerkt, daß in den Figuren 1 und 2 der Verlauf der Aufreißlinien 2 und 3 sowie der Biegelinien 4 nur schematisch angedeutet ist und daß diese Linien zumindest auf der dem Fahrgastinnenraum zugewandten Oberfläche der Abdeckvorrichtung nicht sichtbar oder fühlbar sind.

## Patentansprüche

1. Vorrichtung zum Abdecken der Austrittsöffnung eines in einem Kraftfahrzeug angeordneten Airbags, die beim explosionsartigen Aufblasen des Airbags längs einer vorgegebenen Linie aufreißbar und ein- oder mehrteilig längs Biegeoder Scharnierlinien (4) aufklappbar ist, wobei die Abdeckvorrichtung (1) mehrschichtig ausgebildet ist, **dadurch gekennzeichnet, daß** in der innersten Schicht der Abdeckvorrichtung (1) eine vollständige erste Aufreißlinie (2) als Sollbruchstelle gebildet ist, deren Verlauf der vorgegebenen Linie entspricht, längs derer die Abdeckvorrichtung aufreißt, und daß in einer zweiten Schicht der Abdeckvorrichtung (1) eine zweite, unvollständige Aufreißlinie (3) als Sollbruchstelle gebildet ist, die nur teilweise korrespondierend mit der ersten Aufreißlinie (2) ist.

2. Vorrichtung nach Anspruch 1, **dadurch gekennzeichnet, daß** die zweite Aufreißlinie (3) kürzer als die erste Aufreißlinie (2) ist.

3. Vorrichtung nach Anspruch 1 oder 2, **dadurch gekennzeichnet, daß** die zweite Aufreißlinie (3) mindestens teilweise korrespondierend zu dem zuerst aufreißenden Teil der ersten Aufreißlinie (2) ausgebildet ist.

4. Vorrichtung nach einem der vorhergehenden Ansprüche, **dadurch gekennzeichnet, daß** die erste Schicht aus einem härteren Material besteht als die zweite Schicht.

5. Vorrichtung nach Anspruch 4, **dadurch gekennzeichnet, daß** die zweite Schicht im wesentlichen aus dem gleichen Material besteht wie die Oberschicht der Einbauumgebung des Airbags.

6. Vorrichtung nach einem der vorhergehenden Ansprüche, **dadurch gekennzeichnet, daß** eine dritte und alle weiteren Schichten der Abdeckvorrichtung keine Sollbruchstellen aufweisen.

7. Vorrichtung nach einem der Ansprüche 1 bis 5, **dadurch gekennzeichnet, daß** eine dritte und weitere Schichten eine Sollbruchstelle aufweisen, die nicht länger ist als die Sollbruchstelle in der zweiten Schicht.

8. Vorrichtung nach einem der vorhergehenden Ansprüche, **dadurch gekennzeichnet, daß** die Schichten in an sich bekannter Weise durch Kleben, mechanische Fügetechnik, Preß- oder Spritztechnik vollflächig oder in einem Punktraster miteinander verbunden sind.

## Claims

1. A device for covering the exit opening of an airbag arranged in a motor vehicle, which device is adapted to be torn open along a predetermined line on explosion-like inflation of the airbag and is adapted to swing open in one or more parts along bending or hinge lines (4), the covering device (1) being configured in multiple layers, **characterized in that** in the innermost layer of the covering device (1) a full-length first tear line (2) is formed as a predetermined breaking point, the profile of which corresponds to the predetermined line along which the covering device tears open, and that in a second layer of the covering device (1) a second, non-full-length tear line (3) is formed as a predetermined breaking point, which is only partially coincident with the first tear line (2).

2. The device according to claim 1, **characterized in that** the second tear line (3) is shorter than the first tear line (2).

3. The device according to claim 1 or 2, **characterized in that** the second tear line (3) is configured to be at least partially coincident with that portion of the first tear line (2) which tears open first.

4. The device according to any of the preceding claims, **characterized in that** the first layer consists of a harder material than the second layer.

5. The device according to claim 4, **characterized in that** the second layer is essentially made of the same material as the upper layer of the installation surroundings of the airbag.

6. The device according to any of the preceding claims, **characterized in that** a third layer and any further layers of the covering device have no predetermined breaking points.

7. The device according to any of claims 1 to 5, **characterized in that** a third layer and any further layers have a predetermined breaking point which is not longer than the predetermined breaking point in the second layer.

8. The device according to any of the preceding claims, **characterized in that** the layers are connected to each other over the entire surface or in a dot matrix by bonding, mechanical assembling, pressing or injection molding technique in a manner known per se.

## Revendications

1. Dispositif de recouvrement de l'orifice de sortie d'un airbag agencé dans un véhicule automobile, dispositif qui peut être déchiré le long d'une ligne prédéterminée, lors du gonflage explosif de l'airbag, et qui peut être ouvert en une ou plusieurs parties le long de lignes de pliage ou à charnières (4), le dispositif de recouvrement (1) étant réalisé à plusieurs couches, **caractérisé en ce que** dans la couche située le plus à l'intérieur du dispositif de recouvrement (1), une première ligne de déchirement complète est formée en tant que point destiné à la rupture, dont le tracé correspond à la ligne prédéterminée le long de laquelle le dispositif se déchire, et **en ce que** dans la deuxième couche du dispositif de recouvrement (1) une deuxième ligne de déchirement (3) incomplète est formée en tant que point destiné à la rupture, laquelle ne correspond que partiellement à la première ligne de déchirement (2).

2. Dispositif selon la revendication 1, **caractérisé en ce que** la deuxième ligne de déchirement (3) est plus courte que la première ligne de déchirement (2).

3. Dispositif selon la revendication 1 ou 2, **caractérisé en ce que** la deuxième ligne de déchirement (3) est réalisée de manière à correspondre au moins partiellement à la partie qui se déchire en premier, de la première ligne de déchirement (2).

4. Dispositif selon l'une des revendications précédentes, **caractérisé en ce que** la première couche est en un matériau plus dur que la deuxième couche.

5. Dispositif selon la revendication 4, **caractérisé en ce que** la deuxième couche est sensiblement dans le même matériau que la couche supérieure de l'entourage de l'installation de l'airbag.

6. Dispositif selon l'une des revendications précédentes, **caractérisé en ce qu'**une troisième couche et toutes les autres couches du dispositif de recouvrement ne présentent pas de points destinés à la rupture.

7. Dispositif selon l'une des revendications 1 à 5, **caractérisé en ce qu'**une troisième couche et toutes les autres couches présentent un point destiné à la rupture qui n'est pas plus long que le point destiné à la rupture dans la deuxième couche.

8. Dispositif selon l'une des revendications précédentes, **caractérisé en ce que** les couches sont reliées les unes autres sur toute la surface ou selon une matrice à points, de manière connue en soi par collage, par technique d'assemblage mécanique ou par technique de pressage ou d'injection.
